# EUROPÄISCHE PATENTSCHRIFT

(11) **EP 3 756 453 B1**
(45) Veröffentlichungstag und Bekanntmachung des Hinweises auf die Patenterteilung: **21.07.2021**
(21) Anmeldenummer: 19183267.4
(22) Anmeldetag: 28.06.2019
(51) Int. Cl.: A01G 23/099, A01D 46/26

(54) **VORRICHTUNG MIT EINEM FALTBAREN SCHUTZSCHIRM ZUR NUTZUNG BEI ARBEITEN AN EINEM BAUM**
DEVICE WITH A FOLDABLE SHIELD FOR USE WHEN WORKING ON A TREE
DISPOSITIF POURVU D'ÉCRAN PROTECTEUR PLIABLE DESTINÉ À ÊTRE UTILISÉ LORS DU TRAVAIL SUR UN ARBRE

(43) Veröffentlichungstag der Anmeldung: 30.12.2020
(73) Patentinhaber: Pfanzelt Maschinenbau GmbH, 87675 Rettenbach a. A. (DE)
(72) Erfinder: PFANZELT, Paul, 87675 Rettenbach a. A. (DE); VOSS, Carsten, 86983 Lechbruck am See (DE)
(74) Vertreter: Tetzner, Michael

(56) Entgegenhaltungen:
- EP-A1- 1 792 535
- DE-A1- 1 582 732
- DE-A1- 10 105 524
- DE-U1- 8 536 710
- FR-A1- 2 864 424
- US-A- 5 191 758

## Beschreibung

Die Erfindung betrifft eine Vorrichtung zur Nutzung bei Arbeiten an einem Baum, die einen faltbaren Schutzschirm umfasst. Die Erfindung betrifft weiterhin ein Verfahren zum Fällen eines Baums unter Verwendung einer solchen Vorrichtung.

Beim manuellen Fällen von Bäumen besteht für den das Fällen durchführenden Arbeiter eine hohe Unfallgefahr. Durch während der Fällarbeiten auf den Baum aufgebrachte Schwingungen oder Wind kann sich sogenanntes Totholz im oberen Bereich des zu fällenden Baumes lösen und auf den Arbeiter hinabstürzen. Dies kann schwere Verletzungen verursachen, die sogar tödlich sein können. Aufgrund des teilweise relativ hohen Gewichtes des herabstürzenden Totholzes ist ein Schutz, den ein von dem Arbeiter getragener Helm bietet, nicht immer ausreichend. Das herabstürzende Totholz muss dabei nicht zwangsweise von dem Baum stammen, der gefällt wird. Vielmehr kann auch Wind bei den benachbarten Bäumen Totholz lösen. Weiterhin kann der fallende Baum andere Bäume berühren und so Totholz aus diesen lösen.

Die DE 85 36 710 U1 offenbart eine Vorrichtung zum Abfangen von in Bewegung geratenen Gegenständen, beispielsweise von Baumstämmen während Baumfällarbeiten an einem Hang. Diese umfasst eine Fangeinrichtung, vorzugsweise in Form eines Fangnetzes, das lösbar mit transportierbaren Halteelementen, beispielsweise mit in je einen Betonsockel eingegossenen Metallpfählen, verbunden ist.

Die US 5,191,758 A und die DE 1 582 732 A1 beschreiben jeweils eine Erntemaschine für an Bäumen hängende Nüsse oder Früchte, die einen konischen beziehungsweise trichterförmigen Fangschirm aufweist, der vorderseitig an einem Fahrgestell befestigt ist und der im ausgebreiteten Zustand den Stamm eines Baums, von dem die Nüsse oder Früchte geerntet werden sollen, umgibt. Mittels einer Rüttelvorrichtung werden die Nüsse oder Früchte von dem Baum gelöst und mittels des Fangschirms aufgefangen. Dazu vergleichbare Erntemaschinen sind auch in der FR 2 864 424 A1 und der DE 101 05 524 A1 beschrieben.

Eine Fällhilfe, mittels der eine Kraft auf einen zu fällenden Baum aufgebracht werden kann, die zum Fallen des Baums führen soll, ist in der EP 1 792 535 A1 beschrieben.

Der Erfindung lag die Aufgabe zugrunde, den Schutz für einen Arbeiter beim Fällen eines Baums zu verbessern.

Diese Aufgabe wird mittels einer Vorrichtung gemäß dem Patentanspruch 1 sowie durch ein Verfahren gemäß dem Patentanspruch 15 gelöst. Bevorzugte Ausgestaltungsformen der erfindungsgemäßen Vorrichtung und vorteilhafte Ausführungsformen des erfindungsgemäßen Verfahrens sind Gegenstände der weiteren Patentansprüche und/oder ergeben sich aus der nachfolgenden Beschreibung der Erfindung.

Eine erfindungsgemäße Vorrichtung, die zur Nutzung bei Fällarbeiten an einem Baum vorgesehen ist, umfasst einen faltbaren Schutzschirm, der dazu eingerichtet ist, im ausgebreiteten Zustand einen Stamm des Baums derart zumindest teilweise zu umgeben, dass ein Arbeiter während der Einbringung einer Fällkerbe in einen Abschnitt des Stamms des Baums, der unterhalb des Schutzschirms gelegen ist, darunter stehen kann. Dieser Schutzschirm dient dazu, den während der Arbeiten darunter stehenden Arbeiter vor herabfallenden Gegenständen, insbesondere Totholz, wirkungsvoll zu schützen.

Eine Verwendung einer solchen Vorrichtung im Rahmen eines erfindungsgemäßen Verfahrens zum Fällen eines Baums umfasst zumindest folgende Verfahrensschritte, die vorzugsweise in der angegebenen Reihenfolge durchgeführt werden:
Die Vorrichtung wird bei dem Baum positioniert.

Der Schutzschirm wird derart ausgebreitet, dass dieser den Stamm des Baums zumindest teilweise, vorzugsweise weitestmöglich, d.h. so weit, wie dies konstruktiv oder aufgrund der räumlichen Gegebenheiten möglich ist, umgibt.

Es wird eine Fällkerbe in einen Abschnitt des Stamms des Baums, der unterhalb des Schutzschirms gelegen ist, eingebracht.

Entweder wird ein Freigabebereich, in dem der Schutzschirm den Stamm des Baums nicht umgibt und der vorzugsweise bezüglich der Umfangsrichtung des Stamms an die Fällkerbe angrenzt, bereitgestellt. Dabei kann es erforderlich sein, den Schutzschirm ein Stück weit zusammenzufalten. Alternativ wird die Vorrichtung (mit zusammengefaltetem oder ausgebreitetem Schutzschirm) von dem Baum entfernt. Dies sollte dann selbstverständlich auch für den Arbeiter gelten, der sich bei einem Entfernen der Vorrichtung von dem Baum mit ausgebreitetem Schutzschirm weiter unterhalb des Schutzschirms befinden kann. Wiederum alternativ kann auch vorgesehen sein, dass die Vorrichtung insgesamt nicht von dem Baum entfernt wird, aber der Schutzschirm vollständig zusammengefaltet wird, weil das sich anschließende Fällen des Baums von dem Arbeiter in einer ausreichenden Entfernung von dem Baum ausgelöst wird.

Der Baum wird schließlich zu Fall gebracht. Dabei fällt dieser ggf. durch den bereitgestellten Freigabebereich des Schutzschirms.

Ein Ausbreiten und/oder ein Zusammenfalten des Schutzschirms kann bei einer erfindungsgemäßen Vorrichtung manuell oder maschinell, beispielsweise pneumatisch, hydraulisch oder elektromechanisch, erfolgen. Bei einer maschinell bewegbaren Faltbarkeit des Schutzschirms kann insbesondere vorgesehen sein, dass diese mittels einer Fernbedienung realisierbar ist, was insbesondere ermöglicht, dass dies von einem an einer beliebigen Stelle unterhalb des Schutzschirms stehenden Arbeiter durchgeführt werden kann.

Gemäß einer bevorzugten Ausgestaltungsform einer erfindungsgemäßen Vorrichtung kann vorgesehen sein, dass der Schutzschirm im ausgebreiteten Zustand den Stamm des Baums vollumfänglich umschließt. Dadurch kann einerseits ein möglichst großer Schutzbereich für den Arbeiter mittels des Schutzschirms ausgebildet werden. Andererseits kann durch eine vollumfänglich geschlossen Ausgestaltung des Schutzschirms im ausgebreiteten Zustand eine möglichst hohe Stabilität des Schutzschirms und damit eine möglichst hohe Schutzwirkung realisiert werden. Bei der Verwendung einer entsprechenden Vorrichtung, bei der der Schutzschirm den Stamm des Baums vollumfänglich umschließt, kann es im Rahmen eines erfindungsgemäßen Verfahrens gegebenenfalls erforderlich sein, den zuvor vollumfänglich geschlossenen Schutzschirm teilweise zusammenzufalten, um den Freigabebereich auszubilden, durch den der Baum anschließend fallen soll.

Der Schutzschirm einer erfindungsgemäßen Vorrichtung kann vorzugsweise mindestens einen Greifarm umfasst, wobei der Greifarm beweglich und insbesondere zumindest auch schwenkbar an einen Grundträger angebunden bzw. damit entsprechend verbunden ist, wobei durch ein Bewegen des Greifarms relativ zu dem Grundträger der Schutzschirm ausgebreitet oder zusammengefaltet wird.

Weiterhin bevorzugt kann vorgesehen sein, dass der Schutzschirm ein vorzugsweise aus Kunststoff oder Metall ausgebildetes Schutzschirmtuch umfasst, wodurch besonders einfach eine Faltbarkeit des Schutzschirms realisiert werden kann. Als Schutzschirmtuch wird dabei jedes flächige Gebilde, das im Wesentlichen kraftfrei in beliebiger Richtung deformierbar ist, verstanden. Besonders bevorzugt kann vorgesehen sein, dass das Schutzschirmtuch zumindest teilweise und vorzugsweise vollständig als Netz ausgebildet ist. Dies weist den Vorteil auf, dass ein unter dem Schutzschirm stehender Arbeiter den oberhalb des Schutzschirms liegenden Abschnitt des zu bearbeitenden Baums sowie die nähere Umgebung davon beobachten kann. Alternativ oder ergänzend zu einer Ausgestaltung des Schutzschirms mit einem Schutzschirmtuch kann dieser auch andersartige Schutzschirmelemente, insbesondere auch Schutzschirmplatten umfassen, wenn diese beispielsweise für ein Zusammenfalten in eine nebeneinanderliegende bzw. gestapelte Anordnung geschoben werden können.

Gemäß einer bevorzugten Ausgestaltungsform einer erfindungsgemäßen Vorrichtung kann vorgesehen sein, dass der Schutzschirm eine Mehrzahl von Teilschirmen und besonders bevorzugt genau zwei Teilschirme umfasst, von denen jeder im ausgebreiteten Zustand einen Abschnitt (bei zwei Teilschirmen vorzugsweise jeweils ca. 180°) des von dem Schutzschirm insgesamt überdeckten (Boden-)Bereichs überdeckt. Mittels mehrerer Teilschirme kann auf möglichst einfache Weise ein Schutzschirm realisiert werden, der den Stamm des Baums möglichst weitgehend und insbesondere vollumfänglich umschließt.

Jeder der Teilschirme kann weiterhin bevorzugt einen beweglich an dem Grundträger angebunden Greifarm umfassen, wobei durch ein Bewegen der Greifarme relativ zu dem Grundträger der jeweiligen Teilschirme ausgebreitet oder zusammengefaltet wird.

Weiterhin kann in vorteilhafter Weise vorgesehen sein, dass die Teilschirme in den ausgebreiteten Zuständen durch Verbindungsmittel miteinander verbindbar sind. Dadurch kann erreicht werden, dass sich die Teilschirme aneinander abstützen können, womit ein möglichst stabiler Schutzschirm insgesamt realisiert werden kann.

Gemäß einer bevorzugten Ausgestaltungsform kann vorgesehen sein, dass der Schutzschirm oder, bei entsprechender Ausgestaltung mit mehreren Teilschirmen, die Teilschirme (jeweils) mindestens einen sich von dem (jeweiligen) Greifarm erstreckenden ersten Tragarm, der vorzugsweise unbeweglich mit dem Greifarm verbunden ist, und einen sich von dem Grundträger erstreckenden zweiten Tragarm, der vorzugsweise unbeweglich mit dem Grundträger verbunden ist, aufweist/aufweisen, wobei das/ein Schutzschirmtuch des Schutzschirms oder jedes der Teilschirme an dem (jeweiligen) ersten Tragarm und dem (jeweiligen) zweiten Tragarm befestigt ist. Auf diese Weise kann relativ einfach ein Ausbreiten oder Zusammenfalten des Schutzschirms oder der Schutzschirmtücher durch eine Bewegung des Greifarms oder der Greifarme relativ zu dem Grundträger erreicht werden.

Eine erhöhte Stabilität für den Schutzschirm einer solchen erfindungsgemäßen Vorrichtung kann in vorteilhafter Weise durch einen oder mehrere zusätzliche Tragarme realisiert werden, die (jeweils) beweglich und vorzugsweise schwenkbar an dem (jeweiligen) Greifarm oder dem Grundträger angebunden und in einem Abschnitt mit dem (jeweiligen) Schutzschirmtuch verbunden sind, der vorzugsweise zwischen dem dazugehörigen ersten Tragarm und dem dazugehörigen zweiten Tragarm gelegen ist.

Gemäß einer bevorzugten Ausgestaltungsform einer erfindungsgemäßen Vorrichtung kann vorgesehen sein, dass der Schutzschirm und insbesondere der Grundträger davon an einen Ausleger angebunden ist, wobei der Ausleger wiederum an ein Traggestell angebunden ist. Dabei kann die Anbindung des Schutzschirms an den Ausleger und/oder die Anbindung des Auslegers an das Traggestell vorzugsweise beweglich, insbesondere derart beweglich ausgebildet sein, dass der Schutzschirm zumindest in vertikaler Richtung bewegbar und um zwei zueinander senkrechte Achsen schwenkbar ist. Diese Achsen können vorzugsweise parallel bezüglich der Längsachse zumindest eines Trägers des Auslegers sowie senkrecht zu dieser Längsachse ausgerichtet sein. Unter einer "Bewegung des Schutzschirms in vertikaler Richtung" wird eine Translation verstanden, die zumindest auch eine vertikale Richtungskomponente umfasst. Durch eine solche Ausgestaltung der erfindungsgemäßen Vorrichtung wird ermöglicht, das Traggestell auch in einer größeren Distanz von dem Stamm des Baums zu positionieren, so dass bei der Positionierung die entsprechenden Geländeverhältnisse in der Umgebung des Baums berücksichtigt werden können. Zudem kann auf diese Weise der Schutzschirm in vorteilhafter Weise exakt in einer vorgesehenen Ausrichtung bezüglich des Stamms des Baums positioniert werden, indem dieser durch eine Bewegung des Auslegers relativ zu dem Traggestell und/oder durch eine Bewegung des Schutzschirms selbst relativ zu dem Ausleger entsprechend bewegt wird.

Das Traggestell einer erfindungsgemäßen Vorrichtung kann vorzugsweise auf einem Trägerfahrzeug angeordnet sein. Dieses Trägerfahrzeug kann dabei insbesondere maschinell antreibbar sein, so dass dieses dann einen Antriebsmotor sowie damit in Antriebsverbindung stehende, sich an dem Boden abstützende Antriebselemente, insbesondere Räder und/oder Ketten umfasst. Besonders bevorzugt kann vorgesehen sein, dass ein maschinell antreibbares Trägerfahrzeug mittels einer Fernsteuerung steuerbar ist, so dass dieses von dem Arbeiter gezielt bewegt werden kann, ohne dass sich dieser auf dem Trägerfahrzeug befinden muss. Folglich kann das Trägerfahrzeug und damit auch der Schutzschirm vorzugsweise auch dann bewegt werden, wenn sich der Arbeiter unterhalb des Schutzschirms befindet.

Gemäß einer weiterhin bevorzugten Ausgestaltungsform einer erfindungsgemäßen Vorrichtung kann diese zudem eine Fällhilfe umfassen. Hierbei handelt es sich um ein Gerät, mittels dessen eine Kraft auf den Baum aufgebracht werden kann, die zum Fallen des Baums führt oder zumindest führen soll. Im Rahmen eines erfindungsgemäßen Verfahrens kann die Fällhilfe demnach zum Zufallbringen des Baums genutzt werden. Die auf den Baum aufgebrachte Kraft kann dabei auf einer manuell oder auf einer maschinell erzeugten Kraft beruhen. Vorzugsweise vorgesehen ist eine Fällhilfe, die maschinell und insbesondere pneumatisch, hydraulisch oder elektrisch (insbesondere elektromechanisch) betreibbar ist und die dabei weiterhin bevorzugt erschütterungsfrei, d.h. nicht-schlagend oder nichtvibrierend, arbeitet. Bei einer solchen Ausgestaltung der Vorrichtung kann weiterhin bevorzugt vorgesehen sein, dass das vorzugsweise vorgesehene Trägerfahrzeug eine pneumatische, hydraulische oder elektrische Energiequelle umfasst, an die die Fällhilfe anschließbar ist. Zudem kann vorgesehen sein, dass das Trägerfahrzeug einen Aufnahmebereich aufweist, der für die sichere Aufnahme der Fällhilfe bei Nichtgebrauch und insbesondere während des Transports vorgesehen und eingerichtet ist.

Die Erfindung wird nachfolgend anhand eines in den Zeichnungen dargestellten Ausgestaltungsbeispiels näher erläutert. In den Zeichnungen zeigt, jeweils teilweise in vereinfachter Darstellung:
- Fig. 1:: eine erfindungsgemäße Vorrichtung in einer Transportstellung;
- Fig. 2:: die Vorrichtung in einer Stellung, bei der ein einen Schutzschirm tragender Ausleger der Vorrichtung bereits an einem Stamm eines zu fällenden Baums positioniert ist, wobei der Schutzschirm nur teilweise dargestellt ist;

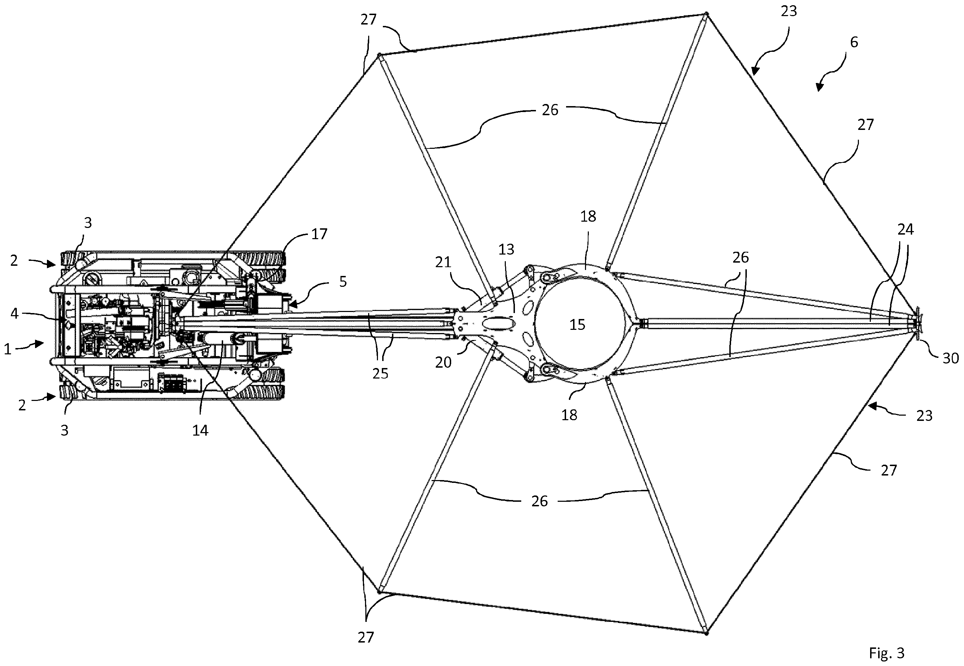

- Fig. 3:: die Vorrichtung mit vollständig ausgebreitetem Schutzschirm (jedoch ohne Darstellung des dazugehörigen Schutzschirmtuchs) in einer Ansicht von oben;
- Fig. 4:: die Vorrichtung mit vollständig ausgebreitetem Schutzschirm in einer perspektivischen Darstellung;
- Fig. 5:: die Vorrichtung mit vollständig ausgebreitetem Schutzschirm in einer Ansicht von hinten;
- Fig. 6:: die Vorrichtung mit vollständig ausgebreitetem Schutzschirm in einer Ansicht von vorne;
- Fig.7:: die Vorrichtung mit vollständig ausgebreitetem Schutzschirm in einer Seitenansicht; und

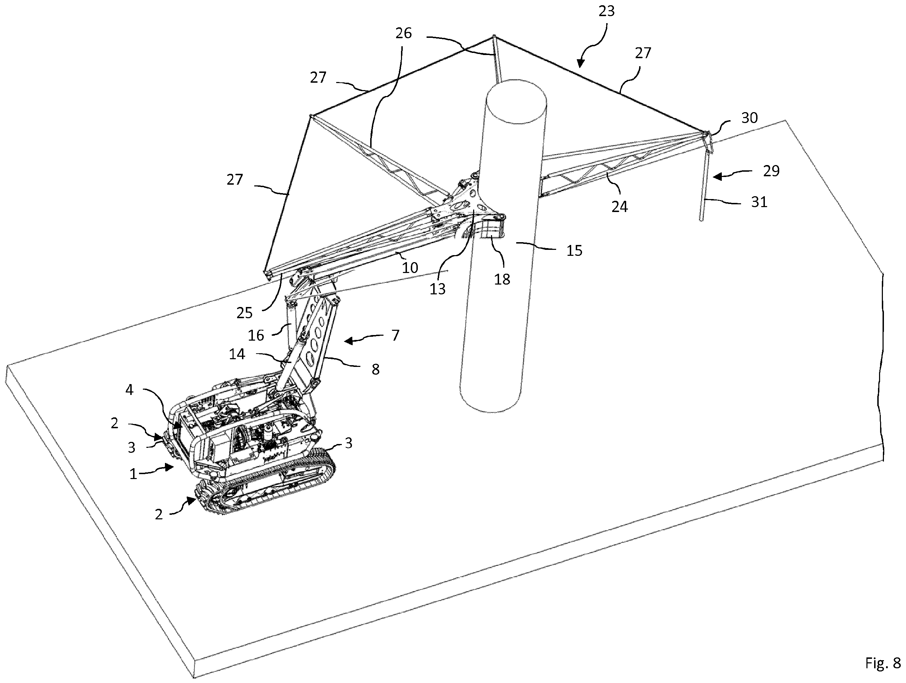

- Fig. 8:: in einer perspektivischen Ansicht die Vorrichtung mit nur einem von zwei Teilschirmen des Schutzschirms in ausgebreiteter Stellung (jedoch ohne Darstellung des dazugehörigen Schutzschirmtuchs), wobei der andere Teilschirm nur teilweise dargestellt ist.

Die in den Zeichnungen dargestellte Vorrichtung umfasst ein Trägerfahrzeug 1 mit einem Raupenfahrwerk, das zwei Kettenlaufwerke 2 (mit gliederlosen beziehungsweise einteiligen Ketten 3) und eine Antriebseinheit 4 umfasst, die beispielsweise derart ausgebildet ist, dass diese einen Verbrennungsmotor umfasst, der bedarfsweise eine Hydraulikpumpe antreibt, die dadurch eine hydraulische Antriebsleistung bereitstellt, die für ein bedarfsweises Betreiben eines mit den Kettenlaufwerken 2 antriebsverbundenen Hydraulikmotors nutzbar ist.

Auf dem Trägerfahrzeug 1 ist ein Traggestell 5 der Vorrichtung unbeweglich angeordnet, wobei dieses Traggestell 5 vorzugsweise lösbar, insbesondere auch ohne den Einsatz von Werkzeugen lösbar, mit dem Trägerfahrzeug 1 verbunden ist. Dies ermöglicht, das Trägerfahrzeug 1 multifunktional und damit auch für andere Zwecke als für den hier vorgesehenen Transport und die Positionierung eines Schutzschirms 6 der Vorrichtung zu nutzen.

An das Traggestell 5 ist ein Ausleger 7 der Vorrichtung angebunden. Dieser Ausleger 7 umfasst zwei Träger 8, 9, von denen ein erster Träger 8 an einem ersten seiner Enden schwenkbar (ausschließlich) um eine in Querrichtung des Trägerfahrzeugs 1 ausgerichtete (erste) Schwenkachse 9 mit dem Traggestell 5 verbunden ist. Ein erstes Ende eines zweiten Trägers 10 ist mit dem ersten Träger 8 an dessen zweiten Ende verbunden, wobei diese Verbindungsstelle zwischen den zwei Trägern 8, 10 derart ausgebildet ist, dass der zweite Träger 10 relativ zu dem ersten Träger 8 um eine ebenfalls in Querrichtung des Trägerfahrzeugs 1 ausgerichtete (zweite) Schwenkachse 11 sowie um eine parallel zu der Längsachse des zweiten Trägers 10 ausgerichtete (dritte) Schwenkachse 12 schwenkbar ist. Diese dritte Schwenkachse 12 verläuft dabei auch in einer Ebene mit der Längsachse des Trägerfahrzeugs 13. An das zweite Ende des zweiten Trägers 10 ist der Schutzschirm 6 der Vorrichtung und konkret ein Grundträger 13 davon unbeweglich angebunden.

Ein Schwenken des ersten Trägers 8 und damit des gesamten Auslegers 7 sowie des daran angebundenen Schutzschirms 6 um die erste Schwenkachse 9 ist mittels eines ersten Hydraulikzylinders 14 realisierbar, der dazu einerseits an dem ersten Träger 8 und andererseits an dem Traggestell 5 abgestützt ist. Durch ein solches Schwenken des Auslegers 7 in Verbindung mit einer definierten Distanz, in der das Trägerfahrzeug 1 von dem Stamm 15 eines zu fällenden Baums entfernt angeordnet ist, kann insbesondere die Höhe, in der der Schutzschirm 6 an dem Stamm 15 des Baums positioniert werden soll, eingestellt werden.

Ein Schwenken des zweiten Trägers 10 und des damit verbundenen Schutzschirms 6 relativ zu dem ersten Träger 8 um die zweite Schwenkachse 11 kann mittels eines zweiten Hydraulikzylinders 16 realisiert werden, der dazu einerseits an dem zweiten Träger 10 und andererseits an dem ersten Träger 8 abgestützt ist.

Ein Schwenken des zweiten Trägers 10 um die dritte Schwenkachse 12 kann mittels eines dritten Hydraulikzylinders 17 bewirkt werden, der dazu ebenfalls an dem ersten Träger 8 und dem zweiten Träger 10 abgestützt ist.

Durch ein Schwenken des zweiten Trägers 10 um die zweite Schwenkachse 12 und/oder um die dritte Schwenkachse 13 kann der Schutzschirm 6 hinsichtlich seiner horizontalen Ausrichtung eingestellt werden.

Der Schutzschirm 6 umfasst neben dem unbeweglich mit dem zweiten Träger 10 des Auslegers 7 verbunden Grundträger 13 zwei Greifarme 18, die an verschiedenen Seiten des Grundträgers 13 jeweils schwenkbar um eine vierte Schwenkachse 19, die senkrecht zu der Längsachse des zweiten Trägers 10 des Auslegers 7 ausgerichtet ist, mit dem Grundträger 13 verbunden sind. Ein Schwenken der Greifarme 18 um die jeweils dazugehörige, vierte Schwenkachse 19 wird mittels eines vierten Hydraulikzylinders 20 und eines fünften Hydraulikzylinders 21 realisiert, die dazu einerseits an dem zweiten Träger 10 des Auslegers 7 und andererseits an dem jeweils zugehörigen Greifarm 18 abgestützt sind.

Die für ein Betreiben der Hydraulikzylinder 14, 16, 17, 20, 21 erforderliche hydraulische Antriebsleistung wird von der Antriebseinheit 4 des Trägerfahrzeugs 1 bereitgestellt.

Die Greifarme 18 weisen einen teilkreisförmigen Längsverlauf auf und diese begrenzen in ihren weitestmöglich ausgeschwenkten Stellungen gemeinsam mit einer ebenfalls teilkreisförmig verlaufenden Begrenzungsfläche 22 des Grundträgers 13 eine im Wesentlichen kreisförmige Durchgangsöffnung des Schutzschirms 6, durch die der Stamm 15 des Baums ragen kann.

Die Greifarme 18 sind jeweils Bestandteil eines Teilschirms 23 des Schutzschirms 6, wobei die Teilschirme jeweils im vollständig ausgebreiteten Zustand den Stamm 15 des Baums über einen Winkelbereich von ca. 180° umgeben, was in Kombination dazu führt, dass der Stamm 15 des Baums im Wesentlichen vollumfänglich von dem Schutzschirm 6 umgeben ist. Jeder der Teilschirme 23 umfasst neben einem der Greifarme 18 einen sich von dem freien Ende des jeweiligen Greifarms 18 erstreckenden ersten Tragarm 24 und einen sich von dem Grundträger 13 erstreckenden zweiten Tragarm 25, wobei diese Tragarme 24, 25 unbeweglich an den jeweiligen Greifarm 18 oder den Grundträger 13 angebunden sind. Dabei weisen diese eine Ausrichtung auf, in der diese im Wesentlichen exakt radial bezüglich einer Längsachse der Durchgangsöffnung des Schutzschirms 6 ausgerichtet sind. Zudem verlaufen diese Tragarme 24, 25 im vollständig ausgebreiteten Zustand des Schutzschirms 6 im Wesentlichen einer Geraden, die im vorliegenden Fall parallel bezüglich der Längsachse des zweiten Trägers 10 des Auslegers 7 und auch bezüglich der Längsachse des Trägerfahrzeugs 1 ausgerichtet ist.

Jeder der Teilschirme 23 umfasst weiterhin mehrere zusätzliche Tragarme 26, die jeweils schwenkbar um zumindest eine weitere Schwenkachse, die parallel bezüglich der Längsachse der Durchgangsöffnung ausgerichtet ist, an entweder die Greifarme 18 oder den Grundträger 13 angebunden sind. Die freien Enden jeweils benachbart angeordneter Tragarme 24, 25, 26 sind über ein Spannseil 27 miteinander verbunden. Weiterhin ist jeweils ein Teil eines Schutzschirmtuchs 28 mit den dazugehörigen Tragarmen 24, 25, 26 der beiden Teilschirme 23 verbunden. Dieses mehrteilige Schutzschirmtuch 28 kann insbesondere in Form eines Kunststoffnetzes ausgebildet sein, wie es beispielsweise auch für die Personenabsturzsicherung eingesetzt wird. Im teilweise oder vollständig ausgebreiteten Zustand des Schutzschirms 6 ist das Schutzschirmtuch 28 mehr oder weniger gespannt und bildet einen Schutz für sich unter diesem befindliche Personen gegen von oben herab fallende Gegenstände, insbesondere Totholz des zu fällenden Baums.

Ein Fällen eines Baums unter Verwendung der Vorrichtung kann beispielsweise folgendermaßen ablaufen.

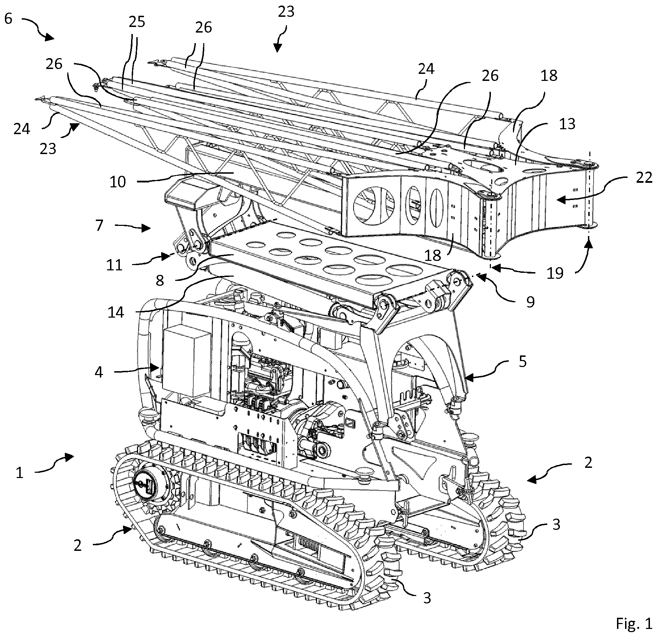

Zunächst fährt die Vorrichtung zu dem zu fällenden Baum. Eine Fahrtsteuerung der Vorrichtung kann dabei insbesondere mittels einer kabelgebundenen oder kabellosen Fernsteuerung (nicht gezeigt) durch einen Arbeiter 32 erfolgen. Die Vorrichtung befindet sich bei dieser Fahrt in der Transportstellung, wie sie in der Fig. 1 dargestellt ist und in der sich der Schutzschirm 6 in der weitestmöglich zusammengefalteten Stellung befindet. Zusätzlich ist in der Transportstellung durch ein entsprechendes Schwenken des Auslegers 7 erreicht, dass dessen Träger 8, 10 übereinander und gleichzeitig zwischen dem Traggestell 5 und dem zusammengefalteten Schutzschirm 6 angeordnet sind. Der Ausleger 7 und der zusammengefaltete Schutzschirm 6 befinden sich dadurch oberhalb des Trägerfahrzeugs 1, wodurch die Vorrichtung einen möglichst geringen Platzbedarf aufweist.

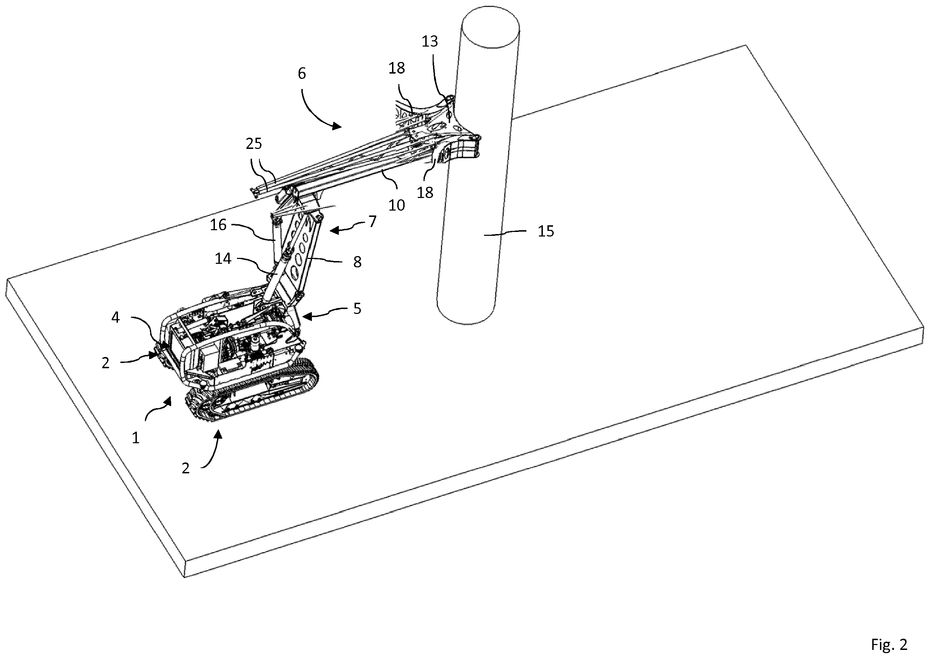

Anschließend kann der Arbeiter 32 den Ausleger 7 mittels einer ferngesteuerten Betätigung der entsprechenden Hydraulikzylinder 14, 16, 17 derart ausfahren, dass der Grundträger 13 des Schutzschirms 6 mit seiner teilkreisförmigen Begrenzungsfläche 22 den Stamm 15 des zu fällenden Baums an einer definierten Höhe kontaktiert oder zumindest in unmittelbarer Nähe davon angeordnet ist (vgl. Fig. 2).

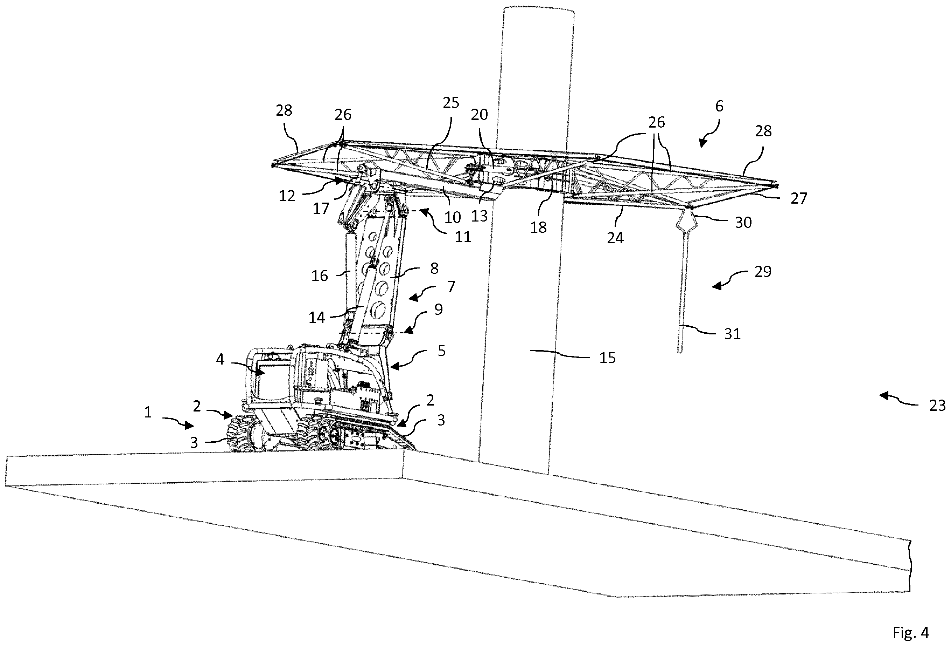

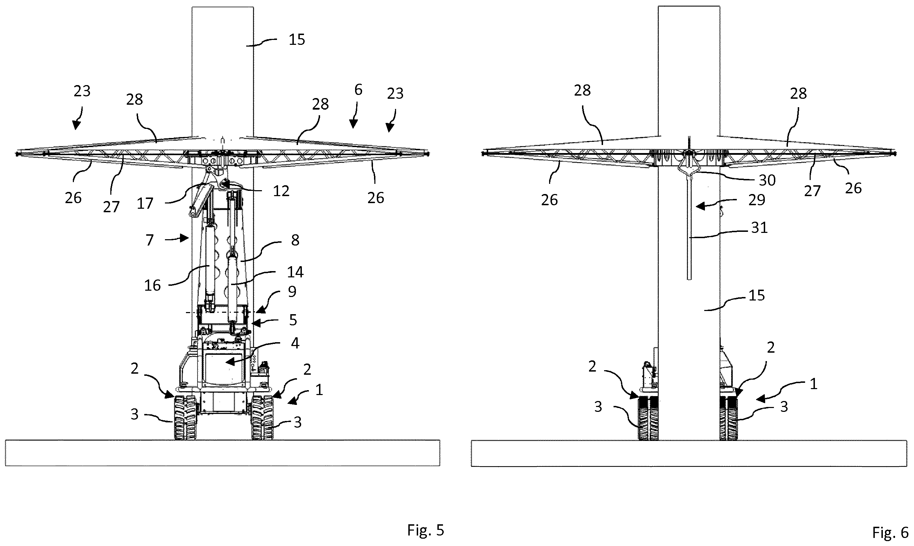

Anschließend kann der Schutzschirm 6 in die den Stamm 15 vollumfänglich umgebende Stellung ausgebreitet werden, wie dies in den Fig. 4 bis 7 dargestellt ist. Ist dies erfolgt, werden die Teilschirme 23 miteinander verbunden. Hierzu wird ein Verbindungsmittel 29 eingesetzt, das eine formstabile Sicherungsschlaufe 30 aufweist, die an einem Ende für eine einfache Handhabung mit einem Griffstab 31 verbunden ist und die in Richtung des gegenüberliegenden Endes sich verjüngend beziehungsweise zulaufend ausgebildet ist. Zur Verbindung der Teilschirme 23 miteinander wird die Sicherungsschlaufe 30 auf die Enden der jeweiligen ersten Tragarme 24 der Teilschirme 23 aufgesetzt und durch eine Klemmfunktionalität der Sicherungsschlaufe 30 werden die beiden ersten Tragarme 24 der Teilschirme 23 gegeneinander gedrückt. Für einen sicheren Halt der Sicherungsschlaufe 30 auf den Enden der ersten Tragarme 24 der Teilschirme 23 kann vorgesehen sein, dass diese entsprechende Aufnahmevertiefungen, beispielsweise in Form von Umfangsnuten, ausbilden, in die die Sicherungsschlaufe 30 eingreifen kann.

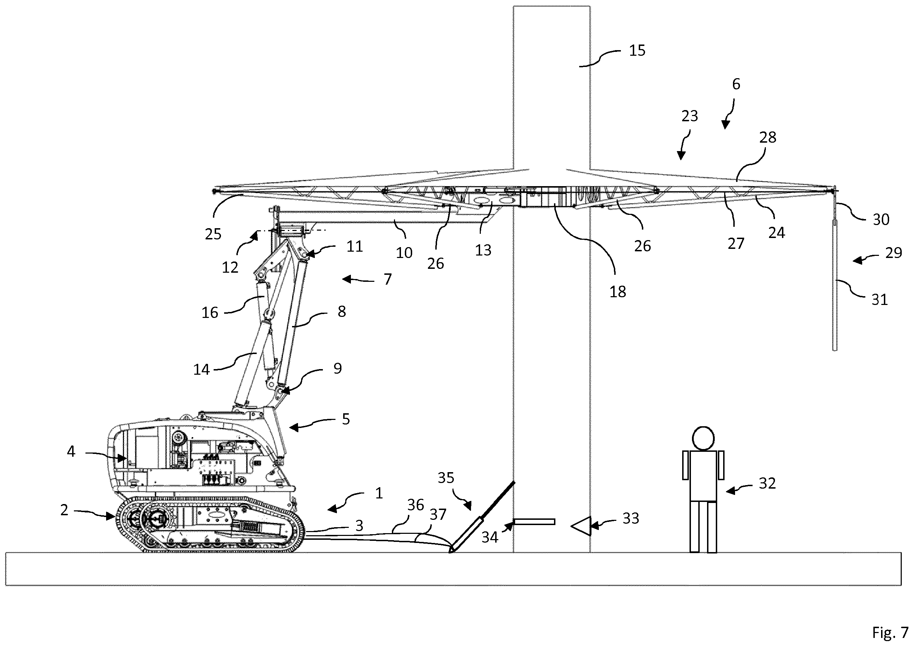

Der Arbeiter 32 kann anschließend mit beispielsweise einer Motorsäge eine Fällkerbe 33 in dem Stamm 15 anlegen (vgl. Fig. 7), die insbesondere auf der von dem Trägerfahrzeug 1 abgewandten Seite des Stamms 15 liegen sollte. Ggf. kann auch vorgesehen sein, dass insbesondere auf der bezüglich der Fällkerbe 33 gegenüberliegenden Seite des Stamms ein Fällschnitt 34 eingebracht wird. Dabei befindet sich der Arbeiter 32 unterhalb des Schutzschirms 6 und ist folglich durch diesen vor einem Kontakt mit herabfallendem Totholz geschützt.

Für das sich anschließende Zufallbringen des Baums wird der Schutzschirm 6, nach einem Entfernen der Verbindungsmittel 29, teilweise geöffnet beziehungsweise zusammengefaltet, um einen Freigabebereich auszubilden, innerhalb dessen der Schutzschirm 6 den Stamm 15 des Baums nicht umgibt, so dass ein kollisionsfreies Fallen des Baumes durch diesen Freigabebereich ermöglicht ist.

Anschließend kann das Fallen des Baums eingeleitet werden. Dies kann beispielsweise durch ein Keilen mit Vorschlaghammer und Kunststoffkeil realisiert werden. Es kann jedoch auch eine Fällhilfe 35 (vgl. Fig. 7) zum Einsatz kommen, die beispielsweise hydraulisch oder elektromechanisch betätigbar ist. Beispielsweise kann eine solche Fällhilfe 35 einen Hydraulikzylinder umfassen, dessen Zylinderrohr schwenkbar an dem Trägerfahrzeug 1 oder an dem Traggestell 5 der Vorrichtung angebunden ist und dessen Kolbenstange an ihrem freien Ende einen angespitzten Kontaktbereich umfasst, der dafür vorgesehen ist, gegen den Stamm 15 des Baums zu drücken und dabei ein Stück weit in diesen einzudringen, wenn der Hydraulikzylinder ausgefahren wird. Dadurch wird der Stamm 15 derart belastet, dass es zu einem Knicken und Brechen im Bereich der Fällkerbe 33 kommt, wodurch der Baum schließlich zu Fall gebracht wird. Der Arbeiter 32 kann sich dabei weiterhin unter dem Schutzschirm 6 aufhalten, wobei bei einer Verwendung einer Fällhilfe das mittels dieser eingeleitete Fallen des Baums per Fernsteuerung ausgelöst werden kann.

Alternativ dazu kann eine solche Fällhilfe 35 auch ohne kraftabstützende Anbindung an das Trägerfahrzeug 1 oder das Traggestell 5 vorgesehen sein (vgl. Fig. 7), wobei dann vielmehr eine Abstützung der auf den Baum ausgeübten Kraft am Boden realisiert sein kann. Dazu kann eine solche Fällhilfe entsprechende Abstützelemente für eine möglichst großflächige Abstützung der Kräfte am Boden und/oder für ein Eindringen in den Boden umfassen. Die Antriebsleistung für den Betrieb einer solchen Fällhilfe 35 kann auch bei dieser Ausgestaltung in vorteilhafter Weise von der Antriebseinheit 4 des Trägerfahrzeugs 1 bereitgestellt werden, wozu der Hydraulikzylinder der Fällhilfe über eine Hydraulikleitung 36 und ggf. auch - insbesondere für eine fernsteuerbare Betätigung - über eine Steuerleitung 37 mit dem Trägerfahrzeug 1 verbunden sein kann.

Weiterhin kann eine Fällhilfe (nicht gezeigt) vorgesehen sein, die auf dem Aufbringen einer Zugkraft auf den Baum mittels eines Seils oder einer Kette, ggf. unter Nutzung mindestens einer Umlenkrolle, beruht. Dabei kann die Zugkraft beispielsweise von einer Winde der Vorrichtung erzeugt werden. Eine solche Winde aber auch freistehend ausgebildet oder in ein anderes Fahrzeug integriert sein.

Gemäß einer alternativen Ausgestaltungsform der beschriebenen Vorrichtung kann die Antriebseinheit beispielsweise auch einen elektrischen Antriebsmotor für die Kettenlaufwerke 2 umfassen, wobei die für den Betrieb des Antriebsmotors erforderliche elektrische Leistung beispielsweise von Batterien und/oder einer Brennstoffzelle und/oder einem Generator, der von einem Verbrennungsmotor antreibbar ist, bereitgestellt werden kann. Für das Bewegen des Auslegers 7 und des Schutzschirms 6 können dann wiederum Hydraulikzylinder 14, 16, 17, 20, 21 genutzt werden, denen hydraulische Antriebsleistung beispielsweise mittels einer elektromotorisch angetriebenen Hydraulikpumpe bereitgestellt werden kann. Anstelle der Hydraulikzylinder 14, 16, 17, 20, 21 können dann jedoch auch elektrische, insbesondere elektromechanische Verstellvorrichtungen (z.B: elektromotorisch antreibbare Gewindespindeln) genutzt werden.

Um eine möglichst gute Geländegängigkeit und Manövrierfähigkeit der Vorrichtung zu realisieren, sollte diese möglichst leicht sein. Dies gilt insbesondere auch für den Schutzschirm 6, da dieser durch die Positionierung an höchster Stelle der Vorrichtung maßgeblich beeinflusst, wie hoch der Schwerpunkt der Vorrichtung insgesamt in den verschiedenen Stellungen des Schutzschirms 6 liegt. Zur Realisierung einer möglichst leichten Vorrichtung und insbesondere eines möglichst leichten Schutzschirms 6 ist unter anderem die Verbindung der beiden Teilschirme 23 im vollständig ausgebreiteten Zustand des Schutzschirms 6 mittels der Verbindungsmittel 29 vorgesehen. Dadurch können die Teilschirme 23 Belastungen durch von diesen abgefangene Gegenstände, insbesondere Totholz, gegenseitig abstützen. Dies ermöglicht, die Teilschirme 23 jeweils relativ schwach und damit leicht zu dimensionieren, ohne dass sich dies negativ auf die Stabilität des Schutzschirms 6 insgesamt auswirkt.

### Bezugszeichenliste:

1 Trägerfahrzeug
2 Kettenlaufwerk
3 Kette
4 Antriebseinheit
5 Traggestell
6 Schutzschirm
7 Ausleger
8 erster Träger des Auslegers
9 erste Schwenkachse
10 zweiter Träger des Auslegers
11 zweite Schwenkachse
12 dritte Schwenkachse
13 Grundträger des Schutzschirms
14 erster Hydraulikzylinder
15 Stamm eines Baums
16 zweiter Hydraulikzylinder
17 dritter Hydraulikzylinder
18 Greifarm
19 vierte Schwenkachse
20 vierter Hydraulikzylinder
21 fünfter Hydraulikzylinder
22 Begrenzungsfläche des Grundträgers
23 Teilschirm des Schutzschirms
24 erster Tragarm eines Teilschirms
25 zweiter Tragarm eines Teilschirms
26 zusätzlicher Tragarm
27 Spannseil
28 Schutzschirmtuch
29 Verbindungsmittel
30 Sicherungsschlaufe der Verbindungsmittel
31 Griffstab der Verbindungsmittel
32 Arbeiter
33 Fällkerbe
34 Fällschnitt
35 Fällhilfe
36 Hydraulikleitung
37 Steuerleitung

## Patentansprüche

1. Vorrichtung zur Nutzung bei Fällarbeiten an einem Baum, **gekennzeichnet durch** einen faltbaren Schutzschirm (6), der dazu eingerichtet ist, im ausgebreiteten Zustand einen Stamm (15) des Baums derart zumindest teilweise zu umgeben, dass ein Arbeiter während der Einbringung einer Fällkerbe in einen Abschnitt des Stamms des Baums, der unterhalb des Schutzschirms gelegen ist, darunter stehen kann.

2. Vorrichtung gemäß Anspruch 1, **dadurch gekennzeichnet, dass** der Schutzschirm (6) im ausgebreiteten Zustand den Stamm (15) des Baums vollumfänglich umschließt.

3. Vorrichtung gemäß Anspruch 1 oder 2, **dadurch gekennzeichnet, dass** der Schutzschirm (6) ein Schutzschirmtuch (28) umfasst, das zumindest teilweise als Netz ausgebildet ist.

4. Vorrichtung gemäß einem der vorhergehenden Ansprüche, **dadurch gekennzeichnet, dass** der Schutzschirm (6) mindestens einen Greifarm (18) umfasst, wobei der Greifarm (18) beweglich an einem Grundträger (13) angebunden ist, wobei durch ein Bewegen des Greifarms (18) relativ zu dem Grundträger (13) der Schutzschirm (6) ausgebreitet oder zusammengefaltet wird.

5. Vorrichtung gemäß einem der vorhergehenden Ansprüche, **dadurch gekennzeichnet, dass** der Schutzschirm (6) eine Mehrzahl von Teilschirmen (23) umfasst, von denen jeder im ausgebreiteten Zustand einen Abschnitt des von dem Schutzschirm (6) insgesamt überdeckten Bereichs überdeckt.

6. Vorrichtung gemäß Anspruch 4 und Anspruch 5, **dadurch gekennzeichnet, dass** jeder der Teilschirme (23) einen beweglich an dem Grundträger (13) angebunden Greifarm (18) umfasst, wobei durch ein Bewegen der Greifarme (18) relativ zu dem Grundträger (13) die Teilschirme (23) ausgebreitet oder zusammengefaltet werden.

7. Vorrichtung gemäß Anspruch 5 oder 6, **dadurch gekennzeichnet, dass** die Teilschirme (23) in den ausgebreiteten Zuständen durch Verbindungsmittel (29) miteinander verbindbar sind.

8. Vorrichtung gemäß Anspruch 4 oder einem der von Anspruch 4 abhängigen Ansprüche, **dadurch gekennzeichnet, dass** der Schutzschirm (6) oder die Teilschirme (23) mindestens einen sich von dem zugehörigen Greifarm (18) erstreckenden ersten Tragarm (24) und einen sich von dem Grundträger (13) erstreckenden zweiten Tragarm (25) aufweist/aufweisen, wobei das/ein Schutzschirmtuch (28) des Schutzschirms (6) oder jedes der Teilschirme (23) an dem zugehörigen ersten Tragarm (24) und zweiten Tragarm (25) befestigt ist.

9. Vorrichtung gemäß Anspruch 8, **gekennzeichnet durch** einen oder mehrere zusätzliche Tragarme (26), die beweglich an den zugehörigen Greifarm (18) oder den Grundträger (13) angebunden und die mit dem zugehörigen Schutzschirmtuch (28) verbunden sind.

10. Vorrichtung gemäß einem der vorhergehenden Ansprüche, **dadurch gekennzeichnet, dass** der Schutzschirm (6) an einen Ausleger (7) angebunden ist, wobei der Ausleger (7) an ein Traggestell (5) angebunden ist.

11. Vorrichtung gemäß Anspruch 10, **gekennzeichnet durch** eine Anbindung des Schutzschirms (6) an den Ausleger (7) und/oder eine Anbindung des Auslegers (7) an das Traggestell (5) derart, dass der Schutzschirm (6) zumindest in vertikaler Richtung bewegbar und um zwei zueinander senkrechte Schwenkachsen (11, 12) schwenkbar ist.

12. Vorrichtung gemäß Anspruch 10 oder 11, **dadurch gekennzeichnet, dass** das Traggestell (5) auf einem Trägerfahrzeug (1) angeordnet ist.

13. Vorrichtung gemäß einem der vorhergehenden Ansprüche, **gekennzeichnet dadurch, dass** die Vorrichtung ferner eine Fällhilfe (35) umfasst.

14. Vorrichtung gemäß Anspruch 12 und 13, **dadurch gekennzeichnet, dass** die Fällhilfe (35) pneumatisch, hydraulisch oder elektrisch betreibbar ist, wobei das Trägerfahrzeug eine pneumatische, hydraulische oder elektrische Energiequelle umfasst, an die die Fällhilfe (35) anschließbar ist.

15. Verfahren zum Fällen eines Baums unter Verwendung einer Vorrichtung gemäß einem der vorhergehenden Ansprüche mit folgenden Verfahrensschritten:
- Positionieren der Vorrichtung bei dem Baum;
- Ausbreiten des Schutzschirms (6) derart, dass dieser den Stamm (15) des Baums umgibt;
- Einbringen einer Fällkerbe in einen Abschnitt des Stamms (15) des Baums, der unterhalb des Schutzschirms (6) gelegen ist;
- Bereitstellen eines Freigabebereichs, in dem der Schutzschirm (6) den Stamm (15) des Baums nicht umgibt, oder Entfernen der Vorrichtung von dem Baum oder vollständiges Zusammenfalten des Schutzschirms; und
- Zufallbringen des Baums.

## Claims

1. Device for use in felling work on a tree, **characterized by** a foldable protective screen (6), which is designed to at least partially surround a trunk (15) of the tree in the spread-out state such that, while making a felling notch in a portion of the trunk of the tree below the protective screen, a worker can stand underneath said screen.

2. Device according to claim 1, **characterized in that** the protective screen (6) completely encloses the trunk (15) of the tree in the spread-out state.

3. Device according to either claim 1 or claim 2, **characterized in that** the protective screen (6) comprises a protective screen cloth (28), which is designed as a net at least in part.

4. Device according to any of the preceding claims, **characterized in that** the protective screen (6) comprises at least one gripping arm (18), the gripping arm (18) being movably attached to a base support (13), the protective screen (6) being spread out or folded up by moving the gripping arm (18) relative to the base support (13).

5. Device according to any of the preceding claims, **characterized in that** the protective screen (6) comprises a plurality of partial screens (23), each of which covers, in the spread-out state, a portion of the region covered by the protective screen (6) as a whole.

6. Device according to claim 4 and claim 5, **characterized in that** each of the partial screens (23) comprises a gripping arm (18) movably attached to the base support (13), the partial screens (23) being spread out or folded up by moving the gripping arms (18) relative to the base support (13).

7. Device according to either claim 5 or claim 6, **characterized in that** the partial screens (23) can be connected to one another by connection means (29) in the spread-out states.

8. Device according to claim 4 or any of the claims dependent on claim 4, **characterized in that** the protective screen (6) or the partial screens (23) has/have at least a first support arm (24) which extends from the associated gripping arm (18) and a second support arm (25) which extends from the base support (13), the/a protective screen cloth (28) of the protective screen (6) or of each of the partial screens (23) being fastened to the associated first support arm (24) and second support arm (25).

9. Device according to claim 8, **characterized by** one or more additional support arms (26) which are movably attached to the associated gripping arm (18) or the base support (13) and connected to the associated protective screen cloth (28).

10. Device according to any of the preceding claims, **characterized in that** the protective screen (6) is attached to an extension arm (7), the extension arm (7) being attached to a support frame (5).

11. Device according to claim 10, **characterized by** attachment of the protective screen (6) to the extension arm (7) and/or attachment of the extension arm (7) to the support frame (5) such that the protective screen (6) is movable at least in the vertical direction and pivotable about two mutually perpendicular pivot axes (11, 12).

12. Device according to either claim 10 or claim 11, **characterized in that** the support frame (5) is arranged on a carrier vehicle (1).

13. Device according to any of the preceding claims, **characterized in that** the device further comprises a felling aid (35).

14. Device according to claim 12 and claim 13, **characterized in that** the felling aid (35) can be operated pneumatically, hydraulically or electrically, the carrier vehicle comprising a pneumatic, hydraulic or electrical energy source to which the felling aid (35) can be connected.

15. Method for felling a tree using a device according to any of the preceding claims, comprising the following method steps:
- positioning the device at the tree;
- spreading out the protective screen (6) such that it surrounds the trunk (15) of the tree;
- making a felling notch in a portion of the trunk (15) of the tree below the protective screen (6);
- providing a release region in which the protective screen (6) does not surround the trunk (15) of the tree, or removing the device from the tree or folding up the protective screen completely; and
- bringing the tree down.

## Revendications

1. Dispositif à utiliser au cours de travaux d'abattage d'un arbre, **caractérisé par** un écran de protection pliable (6) qui est conçu, quand il est à l'état déployé, pour entourer au moins partiellement le tronc (15) d'un arbre, de manière telle qu'un travailleur, quand il fait une entaille d'abattage dans une partie du tronc de l'arbre, partie qui est située au-dessous de l'écran de protection, ledit travailleur puisse se tenir sous ledit écran de protection.

2. Dispositif selon la revendication 1, **caractérisé en ce que** l'écran de protection (6), quand il est à l'état déployé, encercle complètement le tronc (15) de l'arbre.

3. Dispositif selon la revendication 1 ou 2, **caractérisé en ce que** l'écran de protection (6) comprend un tissu d'écran de protection (28) qui est conçu au moins en partie comme un filet.

4. Dispositif selon l'une quelconque des revendications précédentes, **caractérisé en ce que** l'écran de protection (6) comprend au moins un bras préhenseur (18), où le bras préhenseur (18) est relié de façon mobile à un support de base (13), où, par un déplacement du bras préhenseur (18) par rapport au support de base (13), l'écran de protection (6) est déployé ou replié.

5. Dispositif selon l'une quelconque des revendications précédentes, **caractérisé en ce que** l'écran de protection (6) comprend une pluralité d'écrans partiels (23) dont chacun, quand il est à l'état déployé, recouvre une partie de la zone recouverte en totalité par l'écran de protection (6).

6. Dispositif selon la revendication 4 et la revendication 5, **caractérisé en ce que** chacun des écrans partiels (23) comprend un bras préhenseur (18) relié de façon mobile au support de base (13), où, par un déplacement des bras préhenseurs (18) par rapport au support de base (13), les écrans partiels (23) sont déployés ou repliés.

7. Dispositif selon la revendication 5 ou 6, **caractérisé en ce que** les écrans partiels (23), quand ils sont à l'état déployé, peuvent être assemblés les uns aux autres par un moyen d'assemblage (29).

8. Dispositif selon la revendication 4 ou l'une quelconque des revendications dépendant de la revendication 4, **caractérisé en ce que** l'écran de protection (6) ou les écrans partiels (23) présente(nt) au moins un premier bras support (24) s'étendant à partir du bras préhenseur associé (18) et un deuxième bras support (25) s'étendant à partir du support de base (13), où le tissu ou un tissu (28) de l'écran de protection (6) ou bien chacun des écrans partiels (23) est fixé sur le premier bras support associé (24) et sur le deuxième bras support associé (25).

9. Dispositif selon la revendication 8, **caractérisé par** un ou plusieurs bras support(s) supplémentaire (s) (26) qui est ou sont relié (s) de façon mobile au bras préhenseur associé (18) ou au support de base (13), et qui est ou sont assemblé(s) avec le tissu d'écran de protection (28) qui est associé.

10. Dispositif selon l'une quelconque des revendications précédentes, **caractérisé en ce que** l'écran de protection (6) est relié à une flèche (7), où la flèche (7) est reliée à un cadre porteur (5).

11. Dispositif selon la revendication 10, **caractérisé par** une liaison de l'écran de protection (6) avec la flèche (7) et/ou par une liaison de la flèche (7) avec le cadre porteur (5), ladite liaison étant réalisée de manière telle, que l'écran de protection (6) puisse être mobile au moins dans le sens vertical et qu'il puisse pivoter autour de deux axes de pivotement (11, 12) perpendiculaires l'un par rapport à l'autre.

12. Dispositif selon la revendication 10 ou 11, **caractérisé en ce que** le cadre porteur (5) est disposé sur un véhicule porteur (1).

13. Dispositif selon l'une quelconque des revendications précédentes, **caractérisé en ce que** le dispositif comprend en outre une aide à l'abattage (35).

14. Dispositif selon les revendications 12 et 13, **caractérisé en ce que** l'aide à l'abattage (35) peut être actionnée pneumatiquement, hydrauliquement ou électriquement, où le véhicule porteur comprend une source d'énergie pneumatique, hydraulique ou électrique à laquelle peut être raccordée l'aide à l'abattage (35).

15. Procédé d'abattage d'un arbre en utilisant un dispositif selon l'une quelconque des revendications précédentes, ledit procédé comprenant les étapes consistant :
- à positionner le dispositif près de l'arbre ;
- à déployer l'écran de protection (6) de manière telle que celui-ci entoure le tronc (15) de l'arbre ;
- à faire une entaille d'abattage dans une partie du tronc (15) de l'arbre, partie qui est située au-dessous de l'écran de protection (6) ;
- à fournir une zone de dégagement dans laquelle l'écran de protection (6) n'entoure pas le tronc (15) de l'arbre, ou à enlever le dispositif pour le retirer de l'arbre, ou bien à replier complètement l'écran de protection ; et
- à faire tomber l'arbre.
